# EUROPEAN PATENT APPLICATION

(11) **EP 4 618 051 A1**
(43) Date of publication of application: **17.09.2025**
(21) Application number: 24315090.1
(22) Date of filing: 13.03.2024
(51) Int. Cl.: G07C 9/37, G07C 9/38

(54) **PASSENGER TRANSIT VALIDATION AND GATING SYSTEM AND METHOD**

(71) Applicant: Amadeus S.A.S., 06410 Biot (FR); ICM Airport Technics Pty Ltd., Botany, NSW 2019 (AU)
(72) Inventor: Crumpton, Benjamin, BOTANY NSW, 2019 (AU); Abraham, Eldho, 06410 Biot (FR); Landgrebe, Thomas, BOTANY NSW, 2019 (AU); Merritt, Joshua, BOTANY NSW, 2019 (AU); Horsley, Peter, BOTANY NSW, 2019 (AU); Wu, Tony, BOTANY NSW, 2019 (AU)
(74) Representative: Samson & Partner Patentanwälte mbB

(57) **Abstract**

Passenger transit validation and gating for passenger transit from a non-restricted area to a restricted area at a plurality of barrierless gates comprises: identifying a passenger at a passenger identification touchpoint (200) and generating passenger identification data including a passenger face recognition model (230); performing handover of the passenger identification data to a passenger tracking subsystem (300, 400, 500); recognizing the passenger in the passenger tracking subsystem using 3D image data captured by a 3D camera and the passenger face recognition model, and generating a shape recognition model for the passenger; tracking the passenger along a path through a plurality of tracking zones with the 3D camera using the shape recognition model. Transit validation for the passenger is by analyzing the passenger's shape relative to the passenger shape recognition model, wherein the passenger shape recognition model is modified with the passenger's path through the tracking zones. In response to the transit validation passenger feedback and supervision signals (600) are generated which indicate whether transit at the barrierless gate is allowed or denied. (Fig. 2)

## Description

The present disclosure relates to passenger transit validation and gating for passenger transit from a non-restricted area to a restricted area at a plurality of barrierless gates, and, in particular, to a method, a system, and a computer program product for the same.

### BACKGROUND

Passenger processing gates for use in airports are generally known. The current transiting control solutions at gates with movable barriers are expensive and are felt invasive by the passenger. Further, a traditional gate is quite expensive and complex because of the number of mechanical components it includes, and the safety mechanisms it necessitates in order to avoid jamming or accidents. On the other hand, airport authorities would like the security of the full passenger control that a conventional gate offers, but dislike the high investment cost and the intrusive designs.

### SUMMARY

The present disclosure relates to a method, a system, and a computer program product of passenger transit validation and gating for passenger transit from a non-restricted area to a restricted area at a plurality of barrierless gates, as defined by the independent claims. Embodiments are as defined in the dependent claims.

The solution in accordance with the present disclosure is a transit control "gate" which, performs the functions of a regular gate, but which is "barrierless", i.e. contains no moving parts for blocking unauthorized access, and works, essentially, based on pure audio and visual feedback. That means, a traditionally gated control of passenger flow through physical barriers which open/close, does not exist here. The barrierless gate in accordance with the present disclosure uses 3D sensor technology and tracking for passenger transit validation and gating at a plurality of barrierless gates, but is configured to find (essentially) all required intrusion cases, e.g. as fraud or "tailgating", and validates transit with the same level of security as in a conventional gate. The solution in accordance with the present disclosure also reduces ongoing operating costs since the number of agents required to operate multiple lanes of passenger identity checks is reduced.

According to a first aspect of the present disclosure a passenger transit validation and gating method for passenger transit from a non-restricted area to a restricted area at a plurality of barrierless gates comprises identifying a passenger at a passenger identification touchpoint based on personal passenger data which are available at the identification touchpoint, generating a passenger face recognition model for the identified passenger based on visual data derived from a face capturing sensor at the passenger identification touchpoint, and generating passenger identification data which include a tracking ID assigned to the identified passenger and the passenger face recognition model. The method further comprises performing handover of the passenger identification data including the tracking ID and the passenger face recognition model from the passenger identification touchpoint to a passenger tracking subsystem. The method further comprises, in the passenger tracking subsystem, capturing 3D image data of the passenger in a tracking zone using at least one overhead 3D camera, and recognizing the passenger having the assigned tracking ID using the captured 3D image data and the passenger face recognition model, wherein the tracking zone is one of a plurality of tracking zones which define a way through a barrierless gate, generating a shape recognition model for the passenger having the assigned tracking ID, wherein the passenger shape recognition model is derived from 3D image data captured by the 3D camera, and tracking the passenger along a path through the tracking zones by capturing consecutive images of the passenger's shape with the 3D camera. The method further comprises performing transit validation for the passenger by analyzing the passenger's shape as captured by the 3D camera in the tracking zones relative to the passenger shape recognition model, wherein consecutive images being captured in consecutive positions in the passenger's path through a tracking zone. The method further comprises that the passenger shape recognition model is modified with regard to changes of distance and relative position of the passenger to the 3D camera and to perspective transformation depending on distance and position of the passenger relative to the 3D camera for the consecutive images being captured in the passenger's path through the tracking zone. The method further comprises, in response to a result of the transit validation, generating a passenger feedback signal which indicates to the passenger whether transit at the barrierless gate is allowed or denied, and generating a supervision signal which indicates the result of the transit validation to a supervising person, wherein supervision signals are generated and indicated to the supervising person for each of the plurality of barrierless gates.

According to an embodiment, transit validation for the passenger takes into account size, height, shape and position of the passenger as captured by the 3D camera, and validates continuity, variations and anomalies of the passenger's shape as captured by the 3D camera and of a comparison of the passenger's shape as captured by the 3D camera and of the continuously updated passenger shape recognition model when tracking the passenger along the path through the tracking zones.

According to another embodiment, transit validation for the passenger takes into account velocity of the passenger as captured by the 3D camera, and validates continuity, variations and anomalies of the passenger's shape as captured by the 3D camera and of a comparison of the passenger's shape as captured by the 3D camera and of the continuously updated passenger shape recognition model when tracking the passenger along a path through the tracking zones.

According to a further embodiment, identifying the passenger at the identification touchpoint includes generating localisation data which indicates the localisation of the passenger at the identification touchpoint, and wherein the localisation data is utilized in recognizing the passenger having the assigned tracking ID by the 3D camera after handover of the passenger identification data including the tracking ID, the localisation data and the passenger face recognition model from the passenger identification touchpoint to the passenger tracking subsystem.

According to an embodiment, the number of tracking zones within the plurality of tracking zones which define the way through a barrierless gate is dynamically configurable.

According to an embodiment, the shape recognition model includes only upper torso information of the passenger, and transit validation for the passenger is performed by analyzing the passenger's torso shape as captured by the 3D camera in the tracking zones relative to the passenger's torso shape recognition model.

According to a modification of the latter embodiment, information from legs and related movements is captured by additional positional sensors and is analyzed for transit validation in combination with analyzing the passenger's torso shape as captured by the 3D camera in the tracking zones relative to the passenger's torso shape recognition model.

According to an embodiment, for analyzing the passenger's shape as captured by the 3D camera relative to the passenger shape recognition model, 2-dimensional representations are generated from both the passenger's shape as captured by the 3D camera and from the passenger shape recognition model, and are compared repeatedly in a calibration process.

According to a second aspect of the present disclosure, a passenger transit validation and gating system for passenger transit from a non-restricted area to a restricted area at a plurality of barrierless gates is provided which is configured to execute the methods as described herein

Further, according to a third aspect of the present disclosure a computer program product of passenger transit validation and gating for passenger transit from a non-restricted area to a restricted area at a plurality of barrierless gates is provided which, when the program is executed by a computer, cause the computer to carry out the methods described herein.

The computer program comprises instructions which, when the program is executed by a computer, cause the computer to carry out the methods and processes as described herein with reference to the various aspects of the present disclosure.

Embodiments and further aspects of the present disclosure are set forth by the dependent claims.

### BRIEF DESCRITPTION OF THE DRAWINGS

The foregoing and further objects, features and advantages of the present subject matter will become apparent from the following description of exemplary embodiments with reference to the accompanying drawings, wherein like or similar numerals are used to represent like elements, in which:
Fig. 1 illustrates in a perspective view an embodiment with a plurality of barrierless gates, where passenger transit validation and gating for passenger transit from a non-restricted area to a restricted area according to different aspects of the present disclosure can be implemented;
Fig. 2 shows a block diagram of a passenger transit validation and gating system for passenger transit from a non-restricted area to a restricted area at a plurality of barrierless gates according to an embodiment of the present disclosure;
Figs. 3 and 4 illustrate an embodiment of identifying a passenger at a passenger identification touchpoint based on personal passenger data, generating passenger identification data which include a tracking ID assigned to the identified passenger and a passenger face recognition model, and handover of these passenger identification data from the passenger identification touchpoint to a passenger tracking subsystem according to an aspect of the present disclosure;
Fig. 5 illustrates transit validation for a passenger by consecutively analyzing the passenger's shape as captured by a 3D camera in a plurality of tracking zones, according to an aspect of the present disclosure;
Fig. 6 illustrates transit validation for a passenger, which takes into account velocity of the passenger as captured by a 3D camera, when tracking the passenger along a path through a plurality of tracking zones, according to another aspect of the present disclosure;
Fig. 7 illustrates transit validation for a passenger according to another aspect of the present disclosure, where only upper torso information of the passenger's torso shape as captured by the 3D is analyzed for transit validation, and where, in accordance with still another aspect of the present disclosure, information from legs and related movements is captured by additional positional sensors and is additionally analyzed;
Fig. 8 illustrates an example of parallel aircraft boarding, where a passenger who requires assistance is processed separately, and the rest of the passengers can continue to board while exceptions are being handled, according to one or more of the different aspects of the present disclosure.

### DETAILED DESCRIPTION

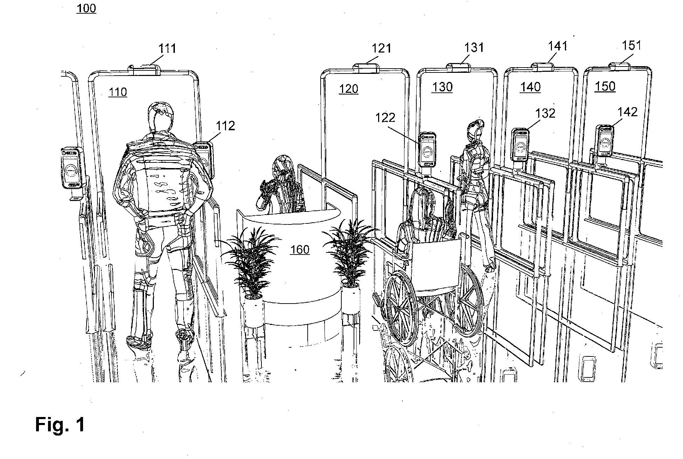

Fig. 1 illustrates in a perspective view an embodiment with a plurality of barrierless gates, where passenger transit validation and gating for passenger transit from a non-restricted area to a restricted area according to an aspect of the present disclosure can be performed.

As shown in Fig. 1, there are a plurality of gates 110, 120, 130, 140, 150 which provide passenger transit from a non-restricted area to a restricted area, e.g. as for boarding an aircraft at an airport. The gates 110 - 150 are without a mechanical barrier, i.e. are "barrierless gates". In the illustrated embodiment, each gate 110 - 150 is equipped with a 3D overhead camera 111, 121, 131, 141, 151. The 3D cameras are adapted to capture 3D image data of the passenger and to track the position of any passenger who is on the way to transit through the gate.

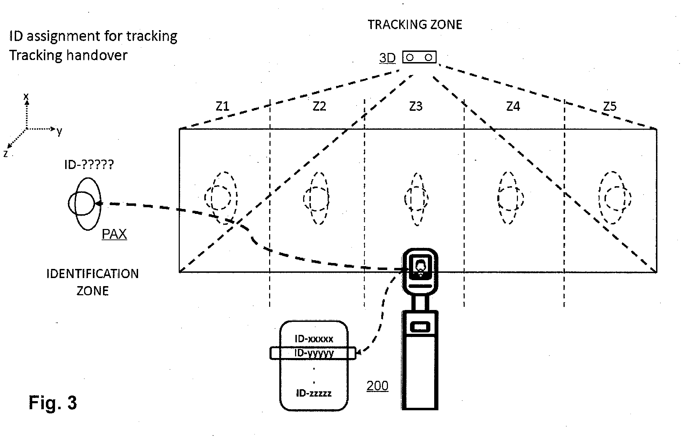

In detail, a 3D camera as indicated in Fig. 1 by the reference numerals 111, 121, 131, 141, 151 is, generally, an image capturing device which is able to provide an output signal which represents 3-dimensional coordinates for each pixel of the captured subject, so that e.g. x-, y- and depth coordinates can be determined for each pixel. In Figs. 3 through 8 the 3D camera is referenced by "3D" and is schematically symbolized as a stereoscopic camera, as well known in the art. Instead, the 3D camera may be, more generally, any other image capturing device which is able to provide an output signal which represents 3-dimensional coordinates for each pixel of the captured subject. Also, instead the mentioned exemplary x-, y- and depth coordinates also other spatial 3D coordinates may be generated for each pixel of the captured subject.

Further, in the illustrated embodiment, each gate 110 - 140 is equipped with a display device 112, 122, 132, 142 (not shown for gate 150), which serves to indicate to the passenger whether transit at the barrierless gate is allowed or denied as a result of a passenger transit validation process, which is carried out when the passenger is along the path through the gate, in the form of a visual and/or an acoustic passenger feedback signal.

Also, in response to the result of the passenger transit validation a supervision signal is generated which indicates the result of the transit validation to a supervising person, located at an agent assistance desk 160. The supervision signals are generated and indicated to the supervising person for each of the plurality of barrierless gates 110 - 150 so that the supervising person is able for supervising each of the plurality of the gates. Hence, the supervising person is able to assist or to intervene in any case of fraud, "tailgating" or if a not validated passenger might try to pass the gate.

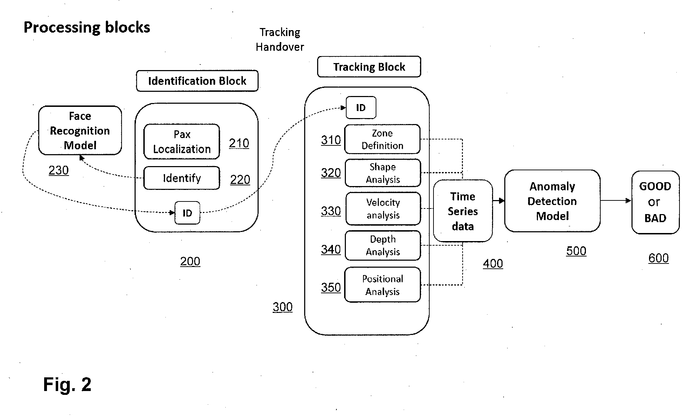

Before being on the way to transit through the gate the passenger has been identified at a passenger identification touchpoint, and passenger identification data generated at the passenger identification touchpoint have been handed over to a passenger tracking subsystem for tracking the passenger along a path through the gate and to perform transit validation for the passenger, as will be described in the following with reference to Figs. 2, 3 and 4.

Fig. 2 shows an overall block diagram of a passenger transit validation and gating system for passenger transit from a non-restricted area to a restricted area at a plurality of barrierless gates according to an embodiment of the present disclosure, which system comprises a passenger identification touchpoint 200 and a passenger tracking subsystem 300, 400, 500.

The passenger identification touchpoint 200 includes a passenger localisation unit 210 and a passenger identification unit 220 to localize and to identify the passenger. At the passenger identification touchpoint 200 the passenger is identified based on personal passenger data (ID-yyyy) which is available at the identification touchpoint 200, as illustrated in Fig. 3. Based on visual data derived from a face capturing sensor which cooperates with the passenger identification unit 220 the latter generates a passenger face recognition model 230. Passenger identification data ID generated at the passenger identification touchpoint 200 include a tracking ID assigned to the identified passenger PAX, Fig. 3, and the passenger face recognition model 230, Fig. 2.

When the passenger identification data ID have been generated at the passenger identification touchpoint 200 the system performs handover of these passenger identification data ID including the tracking ID and the passenger face recognition model from the passenger identification touchpoint 200 to the passenger tracking subsystem 300, 400, 500.

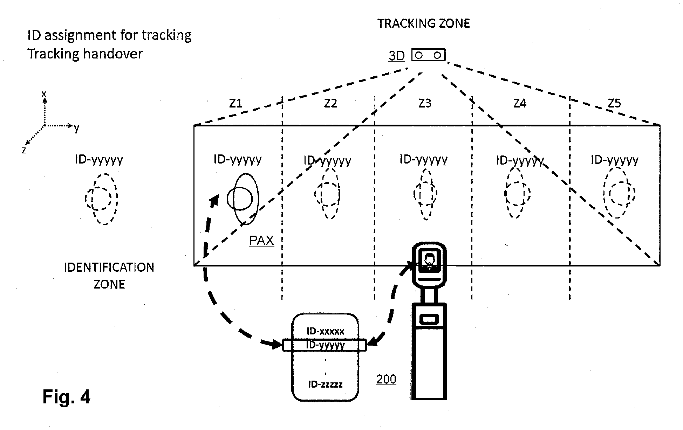

As illustrated in Figs. 3 and 4, an overhead 3D camera, referenced by "3D" is provided to capture 3D image data of the passenger PAX when having proceeded from the passenger identification touchpoint 200 to a tracking zone Z1 which is one of a plurality of tracking zones Z1 - Z5 which define a way through one of the barrierless gates 110, 120, 130, 140, 150 (Fig. 1).

The passenger tracking subsystem 300, 400, 500 is configured to recognize the passenger, having the assigned tracking ID, on the basis of the 3D image data captured by the overhead 3D camera; 111, 121, 131, 141, 151 and the passenger face recognition model 230 which was handed over from the passenger identification touchpoint 200 with the passenger identification data ID. Further, the passenger tracking subsystem 300 is configured to generate a shape recognition model for the passenger, wherein the passenger shape recognition model is derived from 3D image data as captured by the 3D camera.

Furthermore, the tracking subsystem 300, 400, 500 is configured to track the passenger PAX along the path through the tracking zones Z1 - Z5 by consecutively capturing images of the passenger's shape with the 3D camera 111, 121, 131, 141, 151, and to perform transit validation for the passenger by analyzing the passenger's shape as captured by the 3D camera relative to the passenger shape recognition model. During the transit validation process the passenger shape recognition model is repeatedly modified with regard to changes of distance and relative position of the passenger to the 3D camera.

Analyzing the passenger's shape as captured by the 3D camera relative to the passenger shape recognition model can be performed in 3D, but shape changes in the zones, in order to improve the anomaly detection accuracy, can also be calibrated by using standard camera calibration process based on standard 2D/3D camera calibration algorithms. That means, for analyzing the passenger's shape as captured by the 3D camera relative to the passenger shape recognition model, a 2-dimensional representation is generated from both, and is compared repeatedly in a calibration process. This may reduce the computing capacity which is necessary for the analyzation process considerably.

Finally, the tracking subsystem 300, 400, 500 is configured to generate, in response to a result 600 of the transit validation a passenger feedback signal which indicates to the passenger whether transit at the barrierless gate is allowed or denied, and to generate a supervision signal which indicates the result of the transit validation to a supervising person at the agent assistance desk 160, Fig. 1, wherein supervision signals are generated and indicated to the supervising person for each of the plurality of barrierless gates.

Referring back to Fig. 2, the tracking subsystem 300, 400, 500 includes a block 300 which is labelled in the figure as "Tracking Block", and which comprises a plurality of processing units for passenger tracking. In the embodiment of Fig. 2 these processing units include a zone definition unit 310, a shape analysis unit 320, a velocity analysis unit 330, a depth analysis unit 340 and a positional analysis unit 350. Whereas Fig. 2 shows all these units, not all, but only some of them may be included in certain embodiments.

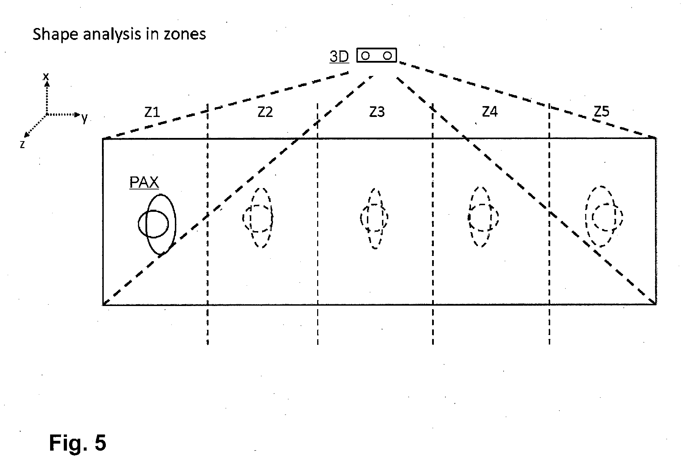

In accordance with one aspect the tracking subsystem 300, 400, 500 performs a shape analysis for the passenger PAX when on the path along the tracking zones Z1 - Z5, as described now with reference to Figs. 4 and 5.

When the passenger having the assigned tracking ID has been recognized on the basis of the 3D image data captured by the overhead 3D camera and the passenger face recognition model, in the tracking zone Z1, as illustrated in Fig. 4, and the shape recognition model has been generated for the passenger, a shape analysis process is performed on the basis of data which are provided by zone definition unit 310, shape analysis unit 320 and positional analysis unit 350.

During this shape analysis process, which is schematically illustrated in Fig. 5, consecutive images of the passenger are captured in consecutive positions in the passenger's path through a tracking zone Z1, Z2, Z3, Z4, Z5, wherein the tracking zone is defined by the zone definition unit 310, and the positions of the passenger PAX are determined by the positional analysis unit 350.

When the passenger proceeds along the path through the tracking zones Z1 - Z5 the passenger shape recognition model is modified with regard to changes of distance and relative position of the passenger to the 3D camera, and the passenger shape recognition model is also modified with regard to a perspective transformation depending on distance and position of the passenger relative to the 3D camera for the consecutive images. Namely, due to the nature of the camera's field of view and general behavior of perspective transformation of objects when viewed through an optic system, one and the same object appears in different shapes depending on which zone the object is located. Accordingly, the passenger's shape from an overhead camera undergoes certain transformation based on the zone placement. Knowledge of this transformation across different zones effectively helps in to track the passenger in the entire path and to prevent any kind of fraud, unauthorized access or "tailgating".

In particular, according to an aspect of the present disclosure, the tracking subsystem 300, 400, 500 is configured such that transit validation for the passenger PAX takes into account size, height, shape and position of the passenger as captured by the 3D camera 111, 121, 131, 141, 151, and validates continuity, variations and anomalies of the passenger's shape as captured by the 3D camera and of a comparison of the passenger's shape as captured by the 3D camera and of the continuously updated passenger shape recognition model when tracking the passenger along the path through the tracking zones Z1, Z2, Z3, Z4, Z5.

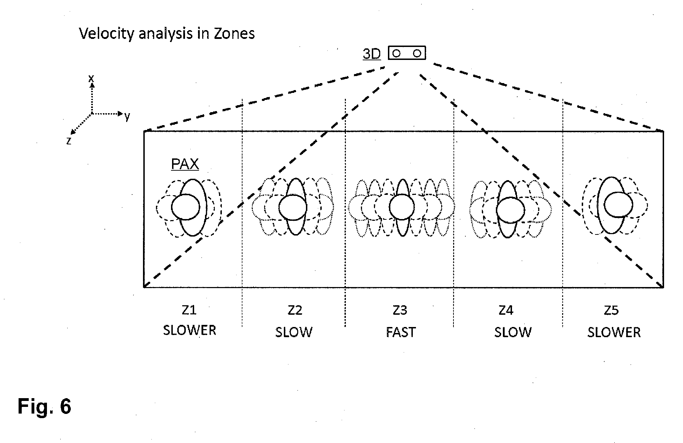

Further, in accordance with another aspect the tracking subsystem 300, 400, 500 performs a velocity analysis for the passenger PAX when on the path along the tracking zones Z1 - Z5, as described now with reference to Figs. 6.

According to the present embodiment the velocity analysis process is performed, similar as the shape analysis process, on the basis of data which are provided by zone definition unit 310, shape analysis unit 320 and positional analysis unit 350, but additionally by the velocity analysis unit 330.

Similar as for shape analysis process, consecutive images of the passenger are captured in consecutive positions on the passenger's path through a tracking zone Z1, Z2, Z3, Z4, Z5, wherein the tracking zone is defined by the zone definition unit 310, and the positions of the passenger PAX are determined by the positional analysis unit 350. Again, when the passenger proceeds along the path through the tracking zones Z1 - Z5 the passenger shape recognition model is modified with regard to changes of distance and relative position of the passenger to the 3D camera 111, 121, 131, 141, 151 and with regard to a perspective transformation depending on distance and position of the passenger relative to the 3D camera for the consecutive images.

Further, velocity of the passenger as captured by the 3D camera 111, 121, 131, 141, 151 is evaluated by the velocity analysis unit 330, and continuity, variations and anomalies of the passenger's shape and velocity as captured by the 3D camera, and compared with the continuously updated passenger shape recognition model when tracking the passenger along the path through the tracking zones Z1 - Z5.

Namely, apart from the general object tracking, the speed at which a passenger moves through different zones can be measured and serves as an important information to detect any kind of anomaly behavior. In particular, when an object moves in a uniform motion in the overhead camera's field of view, the object apparently moves faster when it is closer to the camera than when it is away from the camera.

Considering the overhead camera 111, 121, 131, 141, 151, the passenger apparently moves fastest when in middle zone, here zone Z3, compared to the zones that are farther away from the camera, here zones Z2 and Z4, and Z1 and Z5, respectively. This information is modelled into for each zone by analyzing the momentum of the object movement. Momentum can be calculated by well known methods like e.g. MACD (Moving Average Convergence Divergence) or related methods.

Therefore, according to an aspect of the present disclosure, the tracking subsystem 300, 400, 500 is configured such that transit validation for the passenger takes into account velocity of the passenger as captured by the 3D camera 111, 121, 131, 141, 151, and validates continuity, variations and anomalies of the passenger's shape and velocity as captured by the 3D camera and of a comparison of the passenger's shape and velocity as captured by the 3D camera and of the continuously updated passenger shape recognition model when tracking the passenger along a path through the tracking zones Z1, Z2, Z3, Z4, Z5.

In response to a result of the transit validation, as indicated by reference numeral 600 in Fig. 2, the passenger transit validation and gating system generates a passenger feedback signal which indicates to the passenger PAX whether transit at the barrierless gate is allowed or denied.

Further, the passenger transit validation and gating system generates a supervision signal which indicates the result of the transit validation to a supervising person, wherein supervision signals are generated and indicated to the supervising person for each of the plurality of barrierless gates.

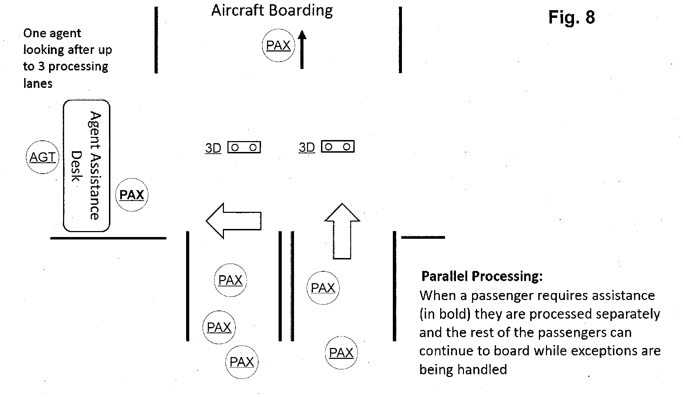

As shown in Fig. 8 which illustrates an example of parallel aircraft boarding with a plurality of passengers PAX, transiting at a barrierless gate, a passenger PAX (in bold), who requires assistance is processed separately by an assistance agent AGT at the assistance agent desk 160. However, the other passengers can continue boarding while exceptions are being handled. Such "parallel processing", according to an aspect of the present disclosure, is in contrast to a sequential process as in traditional boarding, where, when passengers require assistance they need to have their assistance resolved before the passengers behind can proceed.

The embodiment of Fig. 8 shows two 3D cameras which each is referenced by "3D", one for each of the two shown gating lanes. According to another embodiment, instead of one 3D camera for each lane, there can be one 3D camera for two or more gating lanes, if the analyzing process is powerful enough.

According to an embodiment of the present disclosure the system is configured such that identifying the passenger PAX at the identification touchpoint 200 includes generating localisation data which indicates the localisation of the passenger at the identification touchpoint, and wherein the localisation data is utilized in recognizing the passenger having the assigned tracking ID by the 3D camera 111, 121, 131, 141, 151 after handover of the passenger identification data ID from the passenger identification touchpoint 200 to the passenger tracking subsystem 300. That means, the localisation data which indicates the localisation of the passenger at the identification touchpoint 200 "helps to find" the passenger after handover from the passenger identification touchpoint 200 to the passenger tracking subsystem 300.

According to another embodiment of the present disclosure the tracking subsystem 300, 400, 500 is configured such that the number of tracking zones within the plurality of tracking zones Z1, Z2, Z3, Z4, Z5 which define the way through a barrierless gate is dynamically configurable.

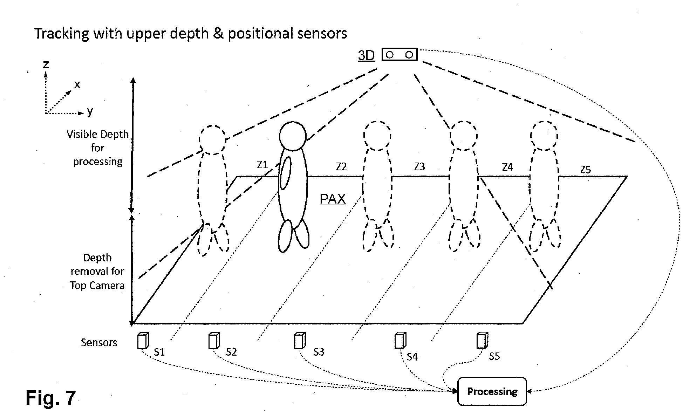

Referring now to Fig. 7, according to still another aspect of the present disclosure the tracking subsystem 300, 400, 500 is configured such that the shape recognition model includes only upper torso information of the passenger, and transit validation for the passenger is performed by analyzing the passenger's torso shape as captured by the 3D camera in the tracking zones Z1, Z2, Z3, Z4, Z5 relative to the passenger's torso shape recognition model.

According to a modification of the latter embodiment, as also illustrated in Fig. 7, the system is configured such that information from legs and related movements is captured by additional positional sensors S1, S2, S3, S4, S5 and is analyzed for transit validation in combination with analyzing the passenger's torso shape as captured by the 3D camera in the tracking zones Z1, Z2, Z3, Z4, Z5 relative to the passenger's torso shape recognition model.

Further, according to another aspect the present disclosure relates to a computer program product of passenger transit validation and gating for passenger transit from a non-restricted area to a restricted area at a plurality of barrierless gates.

The computer program comprises instructions which, when the program is executed by a computer, cause the computer to carry out the methods and processes as described herein with reference to the various aspects of the present disclosure. The computer readable program instructions may be loaded to a computer, another type of programmable data processing apparatus, or may be loaded from another device from a computer readable storage medium or to or from an external computer or external storage device via a network, as it is known in the art.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

## Claims

1. A passenger transit validation and gating method for passenger transit from a non-restricted area to a restricted area at a plurality of barrierless gates, comprising
- identifying a passenger at a passenger identification touchpoint based on personal passenger data which are available at the identification touchpoint, generating a passenger face recognition model for the identified passenger based on visual data derived from a face capturing sensor at the passenger identification touchpoint, and generating passenger identification data which include a tracking ID assigned to the identified passenger and the passenger face recognition model,
- performing handover of the passenger identification data including the tracking ID and the passenger face recognition model from the passenger identification touchpoint to a passenger tracking subsystem,
- in the passenger tracking subsystem capturing 3D image data of the passenger in a tracking zone using at least one overhead 3D camera, and recognizing the passenger having the assigned tracking ID using the captured 3D image data and the passenger face recognition model, wherein the tracking zone is one of a plurality of tracking zones which define a way through a barrierless gate,
- generating a shape recognition model for the passenger having the assigned tracking ID, wherein the passenger shape recognition model is derived from 3D image data captured by the 3D camera,
- tracking the passenger along a path through the tracking zones by capturing consecutive images of the passenger's shape with the 3D camera,
- performing transit validation for the passenger by analyzing the passenger's shape as captured by the 3D camera in the tracking zones relative to the passenger shape recognition model, wherein consecutive images being captured in consecutive positions in the passenger's path through a tracking zone,
- wherein the passenger shape recognition model is modified with regard to changes of distance and relative position of the passenger to the 3D camera and to perspective transformation depending on distance and position of the passenger relative to the 3D camera for the consecutive images being captured in the passenger's path through the tracking zone, and
- in response to a result of the transit validation generating a passenger feedback signal which indicates to the passenger whether transit at the barrierless gate is allowed or denied, and generating a supervision signal which indicates the result of the transit validation to a supervising person, wherein supervision signals are generated and indicated to the supervising person for each of the plurality of barrierless gates.

2. The method of claim 1, wherein transit validation for the passenger takes into account size, height, shape and position of the passenger as captured by the 3D camera, and validates continuity, variations and anomalies of the passenger's shape as captured by the 3D camera and of a comparison of the passenger's shape as captured by the 3D camera and of the continuously updated passenger shape recognition model when tracking the passenger along the path through the tracking zones.

3. The method of claim 1 or 2, wherein transit validation for the passenger takes into account velocity of the passenger as captured by the 3D camera, and validates continuity, variations and anomalies of the passenger's shape and velocity as captured by the 3D camera and of a comparison of the passenger's shape and velocity as captured by the 3D camera and of the continuously updated passenger shape recognition model when tracking the passenger along a path through the tracking zones.

4. The method of claim 1, 2 or 3, wherein identifying the passenger at the identification touchpoint includes generating localisation data which indicates the localisation of the passenger at the identification touchpoint, and wherein the localisation data is utilized in recognizing the passenger having the assigned tracking ID by the 3D camera after handover of the passenger identification data including the tracking ID, the localisation data and the passenger face recognition model from the passenger identification touchpoint to the passenger tracking subsystem.

5. The method of any of the preceding claims, wherein the number of tracking zones within the plurality of tracking zones which define the way through a barrierless gate is dynamically configurable.

6. The method of any of the preceding claims,wherein the shape recognition model includes only upper torso information of the passenger, and transit validation for the passenger is performed by analyzing the passenger's torso shape as captured by the 3D camera in the tracking zones relative to the passenger's torso shape recognition model.

7. The method of claim 6, wherein information from legs and related movements is captured by additional positional sensors and is analyzed for transit validation in combination with analyzing the passenger's torso shape as captured by the 3D camera in the tracking zones relative to the passenger's torso shape recognition model.

8. The method of any of the preceding claims, wherein for analyzing the passenger's shape as captured by the 3D camera relative to the passenger shape recognition model, 2-dimensional representations are generated from both the passenger's shape as captured by the 3D camera and from the passenger shape recognition model, and are compared repeatedly in a calibration process.

9. A passenger transit validation and gating system for passenger transit from a non-restricted area to a restricted area at a plurality of barrierless gates, configured
- to identify a passenger (PAX) at a passenger identification touchpoint (200) based on personal passenger data (ID-yyyy) which are available at the identification touchpoint (200), to generate a passenger face recognition model for the identified passenger based on visual data derived from a face capturing sensor (220) at the passenger identification touchpoint (200), and to generate passenger identification data (ID) which include a tracking ID assigned to the identified passenger (PAX) and the passenger face recognition model,
- to perform handover of the passenger identification data (ID) including the tracking ID and the passenger face recognition model from the passenger identification touchpoint (200) to a passenger tracking subsystem (300),
- in the passenger tracking subsystem (300), to capture 3D image data of the passenger (PAX) in a tracking zone using at least one overhead 3D camera (111, 121, 131, 141, 151), and to recognize the passenger having the assigned tracking ID using the captured 3D image data and the passenger face recognition model,, wherein the tracking zone (Z1) is one of a plurality of tracking zones (Z1, Z2, Z3, Z4, Z5) which define a way through a barrierless gate (110, 120, 130, 140, 150),
- to generate a shape recognition model for the passenger (PAX) having the assigned tracking ID, wherein the passenger shape recognition model is derived from 3D image data as captured by the 3D camera (111, 121, 131, 141, 151),
- to track the passenger (PAX) along a path through the tracking zones by capturing consecutive images of the passenger's shape with the 3D camera (111, 121, 131, 141, 151),
- to perform transit validation (310, 320, 330, 340, 350, 400, 500) for the passenger (PAX) having the assigned tracking ID by analyzing the passenger's shape as captured by the 3D camera (111, 121, 131, 141, 151) in the tracking zones (Z1, Z2, Z3, Z4, Z5) relative to the passenger shape recognition model, , wherein consecutive images being captured in consecutive positions in the passenger's path through a tracking zone, and wherein the passenger shape recognition model is modified with regard to changes of distance and relative position of the passenger (PAX) to the 3D camera (111, 121, 131, 141, 151) and to perspective transformation depending on distance and position of the passenger (PAX) relative to the 3D camera (111, 121, 131, 141, 151) for the consecutive images being captured in the passenger's path through the tracking zone, and
- to generate, in response to a result (600) of the transit validation a passenger feedback signal which indicates to the passenger (PAX) whether transit at the barrierless gate is allowed or denied, and to generate a supervision signal which indicates the result of the transit validation to a supervising person (AGT), wherein supervision signals are generated and indicated to the supervising person for each of the plurality of barrierless gates.

10. The system of claim 9, wherein the system is configured such that transit validation for the passenger (PAX) takes into account size, height, shape and position of the passenger as captured by the 3D camera (111, 121, 131, 141, 151), and validates continuity, variations and anomalies of the passenger's shape as captured by the 3D camera and of a comparison of the passenger's shape as captured by the 3D camera and of the continuously updated passenger shape recognition model when tracking the passenger along the path through the tracking zones (Z1, Z2, Z3, Z4, Z5).

11. The system of claim 9 or 10, wherein the system is configured such that transit validation for the passenger takes into account velocity of the passenger as captured by the 3D camera (111, 121, 131, 141, 151), and validates continuity, variations and anomalies of the passenger's shape and velocity as captured by the 3D camera and of a comparison of the passenger's shape and velocity as captured by the 3D camera and of the continuously updated passenger shape recognition model when tracking the passenger along a path through the tracking zones (Z1, Z2, Z3, Z4, Z5).

12. The system of claim 9, 10 or 11, wherein the system is configured such that identifying the passenger (PAX) at the identification touchpoint (200) includes generating localisation data which indicates the localisation of the passenger (PAX) at the identification touchpoint, and wherein the localisation data is utilized in recognizing the passenger having the assigned tracking ID by the 3D camera (111, 121, 131, 141, 151) after handover of the passenger identification data (ID) including the tracking ID, the localisation data and the passenger face recognition model from the passenger identification touchpoint (200) to the passenger tracking subsystem (300).

13. The system of any of claims 9 - 12, wherein the system is configured such that the number of tracking zones within the plurality of tracking zones (Z1, Z2, Z3, Z4, Z5) which define the way through a barrierless gate is dynamically configurable.

14. The system of any of claims 9 - 13, wherein the system is configured such that the shape recognition model includes only upper torso information of the passenger, and transit validation for the passenger is performed by analyzing the passenger's torso shape as captured by the 3D camera (111, 121, 131, 141, 151) in the tracking zones (Z1, Z2, Z3, Z4, Z5) relative to the passenger's torso shape recognition model.

15. The system of claim 14, wherein the system is configured such that information from legs and related movements is captured by additional positional sensors (S1, S2, S3, S4, S5) and is analyzed for transit validation in combination with analyzing the passenger's torso shape as captured by the 3D camera (111, 121, 131, 141, 151) in the tracking zones (Z1, Z2, Z3, Z4, Z5) relative to the passenger's torso shape recognition model.

16. The system of any of the preceding claims, wherein, system is configured such that for analyzing the passenger's shape as captured by the 3D camera relative to the passenger shape recognition model, 2-dimensional representations are generated from both the passenger's shape as captured by the 3D camera and from the passenger shape recognition model, and are compared repeatedly in a calibration process.

17. A computer program product comprising program code instructions stored on at least one computer readable medium to execute the method according to any one of claims 1 to 8, when said program code instructions are executed on a computer.
